(19) Europäisches Patentamt
European Patent Office
Office européen des brevets

(11) Publication number: 0 409 334 A2

# (12) EUROPEAN PATENT APPLICATION

(21) Application number: 90201918.1

(22) Date of filing: 16.07.90

(51) Int. Cl.5: C08G 63/685, C08G 69/44, C07D 403/04

(30) Priority: 20.07.89 NL 8901880

(43) Date of publication of application: 23.01.91 Bulletin 91/04

(84) Designated Contracting States: AT BE CH DE DK ES FR GB GR IT LI NL SE

(71) Applicant: STAMICARBON B.V.
Mijnweg 1
NL-6167 AC Geleen(NL)

(72) Inventor: Vriesema, Bindert Klaas
Burg. Luytenstraat 47
NL-6151 GE Sittard(NL)
Inventor: Rademakers, Gerardus Arnoldus
Dillegaard 165
NL-6417 HK Heerlen(NL)

## (54) Anisotropic polymers based on an S-triazine derivative.

(57) The invention relates to an aromatic polymer processable from the melt and showing anisotropic behaviour, which polymer contains a triazine unit according to formula I:

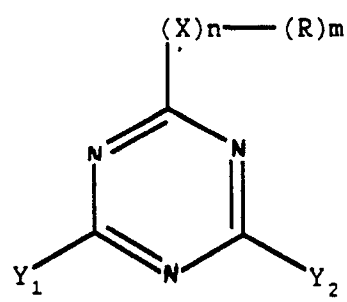

where Y1 and Y2 are the same or different and comprise an (alkyl)carboxy, an (alkyl)hydroxy or an amino group, where R = hydrogen, alkyl radical with 1-4 C atoms, cycloalkyl radical with 3-6 C atoms, allyl radical, aryl radical or halogen, and
m = 1 or 2;
n = 0 or 1, if n = 1
then: X = -O-, -SO2- or -N=;
or $(X)_n$-$(R)_m$ is a group according to any one of formulas II:

EP 0 409 334 A2

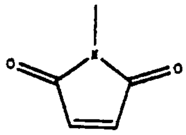

(a)

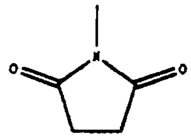

(b)

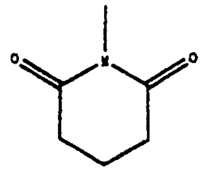

(c)

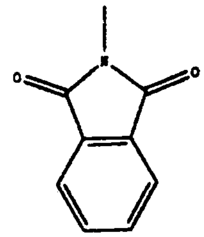

(d) (II)

The polymer according to the invention has, in addition to a good thermal shock resistance, excellent mechanical properties and will mainly be used in the electrical engineering, the aircraft industry, the automative industry and for the production of ovenware.

# ANISOTROPIC POLYMERS BASED ON AN S-TRIAZINE DERIVATIVE

The invention relates to aromatic polymers processable from the melt and showing anisotropic behaviour, based on aromatic hydroxy acids, aromatic diols and aromatic dicarboxylic acids.

Such aromatic polymers are known from, for instance, the UK patent specification 2058102. The polymers as described in GB-A-2058102 are polyesters based on an aromatic diacid, para-hydroxybenzoic acid and biphenol. Articles of such polymers not only have good mechanical properties, but also a satisfactory temperature resistance. The polymers therefore look suited for the production of ovenware.

For such a use it is necessary that the ovenware produced should also have a very good thermal shock resistance. Although articles produced from the polymers according to GB-A-2058102 are found in the patent specification to have a better thermal shock resistance than thermoplastics like, for instance, polypropylene and polybutyleneterephthalate, the thermal shock resistance is still insufficient, however. There is therefore a need of articles produced from polymers having an improved thermal shock resistance in addition to good mechanical properties.

The object of the invention is to provide an aromatic polymer with anisotropic behaviour that fills this need.

An aromatic polymer has now been found processable from the melt and showing anisotropic behaviour, which aromatic polymer is characterized in that it contains a triazine unit according to formula I:

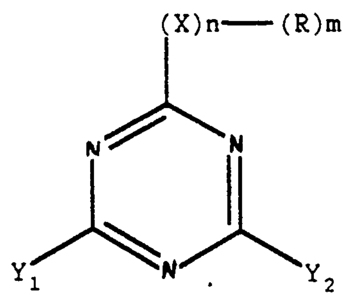

where Y1 and Y2 are the same or different and comprise an (alkyl)carboxy, an (alkyl)hydroxy or an amino group; where R = hydrogen, alkyl radical with 1-4 C atoms, cycloalkyl radical with 3-6 C atoms, allyl radical, aryl radical or halogen, and

m = 1 or 2;

n = 0 or 1, if n = 1

then: X is -O-, $-SO_2-$ or -N=;

or $(X)_n-(R)_m$ is a group according to any one of formulas II:

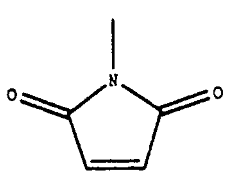 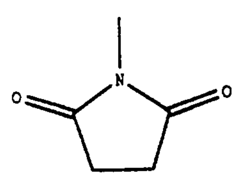 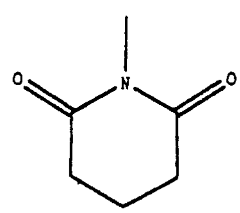 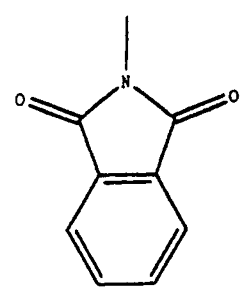 (II)

(a) (b) (c) (d)

Examples of $(X)_n-(R)_m$ are for instance $-CH_3$, $-CH_2-Ch_3$, $-C(CH_3)_3$, $-C_6H_5$m $-SO_2-C_6H_5$, $-SO_2-C_6H_5-CH_3$, $-C(CH_3)_2-C_6H_5$.

Surprisingly, it has been found that aromatic polymers according to the invention not only have a good thermal shock resistance, but also that, owing to improved flow properties, they can be properly processed and have excellent mechanical properties.

It should be noted that aromatic polymers containing triazine units are known from patent specification

JP-A-74.017.675. However, the aromatic polymers described in said patent specification, the so-called polyamides, do not show any anisotropic behaviour and do not have a high thermal stability.

JP-A-63.196.626 describes copolyester resins based on an aromatic diacid, an aliphatic diol component and a triazine unit. Such resins are suited only as coating and/or adhesive material. They show no anisotropic behaviour.

The aromatic polymers according to the invention preferably contain 0.01-10 moles % triazine units according to formula (I). The amount strongly depends on the substitution group X. If this substituent is a hydrogen, an alkyl, allyl or aryl group, the amount of triazine units in the polymer according to the invention is preferably 0.01-7.5 moles %.

In the polymer according to the invention substitution groups Y1 and Y2 are for instance -COOH, $-CH_2-COOH$, $-CH_2-CH_2-COOH$, -OH, $-CH_2OH$, $-CH_2-CH_2OH$, $-NH_2$ and are preferably amino groups. More particularly the triazine unit is acetoguanamine and/or benzoguanamine. These compounds are commercially available.

It is possible also to use a triazine derivative with a substitution group $(X)_n-(R)_m$ according to formula II. Such triazine units can be obtained conveniently using melamine. Melamine contains three functional amine groups. Melamine and derivatives of it are described extensively in The Chemistry of Heterocyclic Compounds, S-triazines and Derivatives, Edwin M. Smolin and Lorence Rapoport, 1959, Interscience Publisher, New york. For the preparation of anisotropic polymers with a derivative according to formula II it is necessary that a fully or partly selective substitution should take place of one of the three functional groups of melamine. The selective substitution preferablytakes place under mild temperature and pressure conditions. Succinic anhydride or phthalic anhydride is used in particular. For instance, by reacting melamine with succinic acid/anhydride a substance is obtained with formula II b: 2,4-diamino-6-succinimino-1,3,5-triazine.

The invention is particularly effective with aromatic polymers which, in addition to the triazine unit, also contain:

a. units with an oxy and a carboxyl group,
b. units with two oxy groups and
c. units with two carboxyl groups.

The choice of the unit with an oxy and a carboxyl group is determined by the desired polymer properties. Generally, such a unit has a formula

$$-O-R-\overset{O}{C},$$

where R contains at least one aromatic ring, for instance:

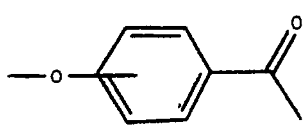 (III) 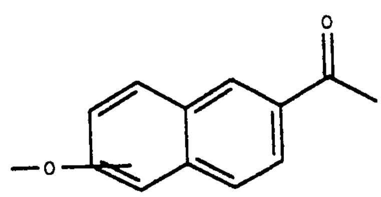 (IIIa)

The polymer according to the invention preferably contains oxybenzoyl units with formula (III). These units come from hydroxybenzoic acid or from its derivatives. The oxybenzoyl unit of (III) may be para or meta-substituted. Mixtures of para and meta-substituted oxybenzoyl units with formula (III) are possible, too. Unit (III) is preferably para-substituted. In the aromatic ring one or more of the hydrogen atoms may be substituted by an alkyl or alkoxy group with one to four carbon atoms, by a halogen, for instance chlorine, bromine and fluorine, and/or by a phenyl group, which is substituted if so desired. The oxybenzoyl unit is preferably derived from p-hydroxybenzoic acid.

The polymer preferably contains 20-70 moles % oxybenzoyl units calculated on the total polymer.

Units with two oxy groups generally have the formula -O-R-O-, where R contains at least one aromatic ring, for instance

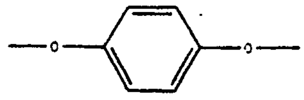

(IVa)

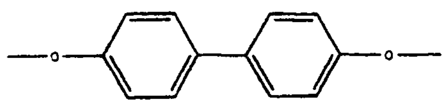

(IVb)

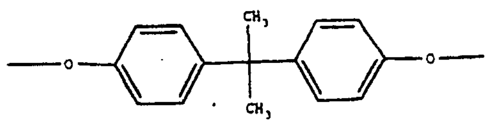

(IVc)

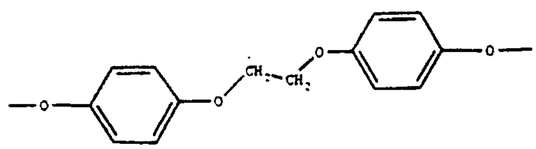

(IVd)

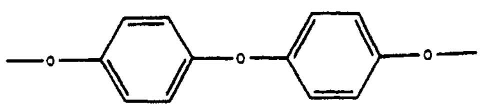

(IVe)

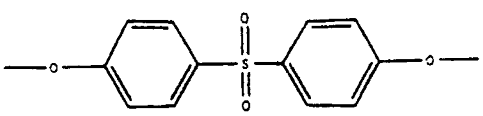

(IVf)

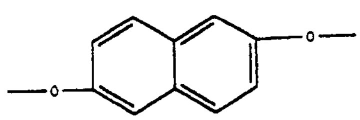

(IVg)

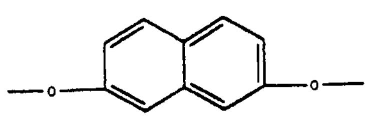

(IVh)

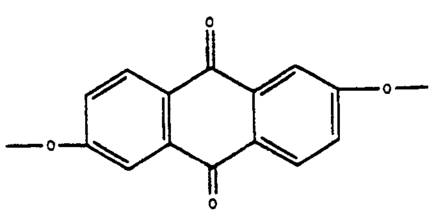

(IVi)

The polymer according to the invention may also contain mixtures of the above-mentioned units. The polymer according to the invention preferably contains dioxybenzyl (IVa) and/or biphenoxy (IVb) groups, more particularly a biphenoxy group with formula (IVb). The last-mentioned compound can be obtained from p,p′-biphenol. In the aromatic rings one or more hydrogen atoms may be substituted by an alkyl and/or alkoxy group, a halogen and/or a phenyl group, which in itself may be substituted, too.

The polymer preferably contains 5-40 moles % units with two oxy groups.

The aromatic units with two carboxyl groups can be obtained from aromatic dicarboxylic acids or from the corresponding esters, for instance terephthalic acid, isophthalic acid, 2,6-naphthalenedicarboxylic acid, 2,7-naphthalenedicarboxylic acid, and bibenzoic acid, 4,4′-dicarboxyldiphenylsulphone, 4,4,-dicarboxyldiphenylethane, 4,4,-dicarboxyldiphenylsulphide, 4,4,-dicarboxylphenylether, 4,4,-dicarboxyldiphenylmethane, 4,4,-dicarboxyldiphenoxyethane, 2,2-bis(4-carboxylphenyl)propane. The aromatic units with two carboxyl groups are preferably obtained from terephthalic acid, isophthalic acid and/or derivatives thereof.

In the aromatic ring one or more hydrogen atoms may be substituted by an alkyl and/or alkoxy group, a halogen and/or a phenyl group, which last-mentioned may be substituted, too. The units with two carboxyl

groups are preferably obtained from unsubstituted terephthalic acid and/or isophthalic acid. The polymer preferably contains 5-40 moles % units with two carboxyl groups.

The polymer may, if so desired, also contain 0-30 moles % of another amine-containing unit, which can be obtained, inter alia, from substances known in the art, for instance p-aminobenzoic acid, p-aminophenol, p-N-methyl-aminophenol, p-phenylenediamine, N-methyl-p-phenylenediamine, N,N′-dimethyl-p-phenylenediamine, m-aminophenol, 4-amino-1-naphthol, 4-amino-4′-hydroxydiphenyl, 4-amino-4′-hydroxyphenylether, 4-amino-4′-hydroxydiphenylmethane, 4-amino-4′-hydroxydiphenylethane, 4-amino-4′-hydroxydiphenylsulphone, 4-amino-4′-hydroxydiphenylsulphide, 4,4′-diaminophenylsulphide, 4,4′-diaminodiphenylsulphone, 2,5-diaminotoluene, 4,4′-ethylenediamine, 4,4′-diaminodiphenoxyethane, 4,4′-diaminodiphenylmethane, 4,4′-diaminodiphenylether.

In addition to the above-mentioned units, the polymer may yet contain sulphone, urethane, carbonate, imide, keto, sulphide, azo, anhydride and/or thioester groups. Non-limiting examples of triazine compounds according to this invention are

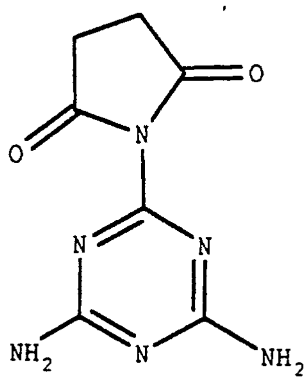

(Va)

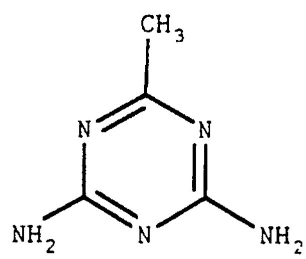

(Vb)

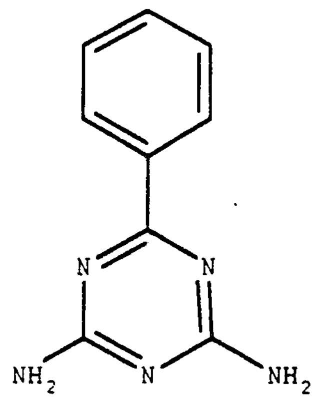

(Vc)

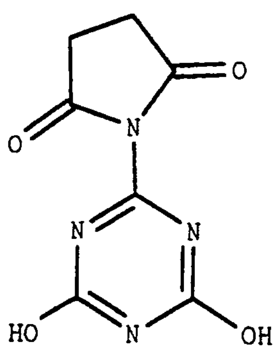

(Vd)

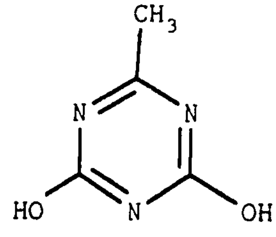

(Ve)

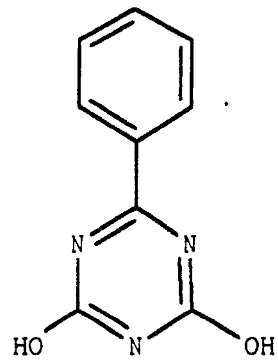

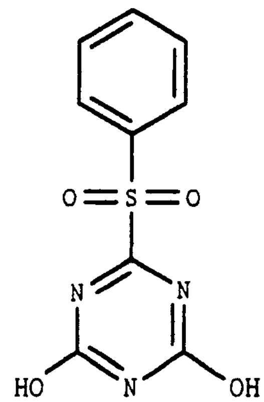

(Vf) (Vg)

(Vh)

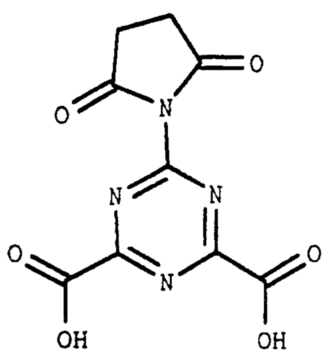

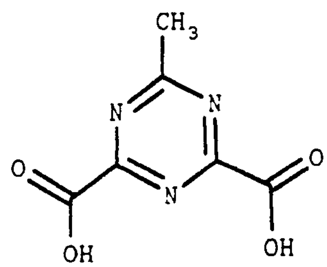

(Vi)

(Vj)

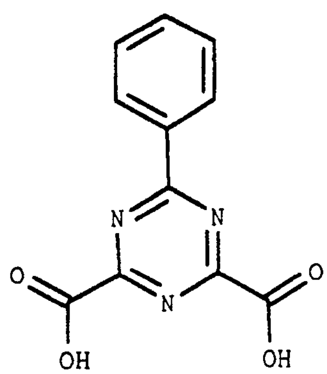

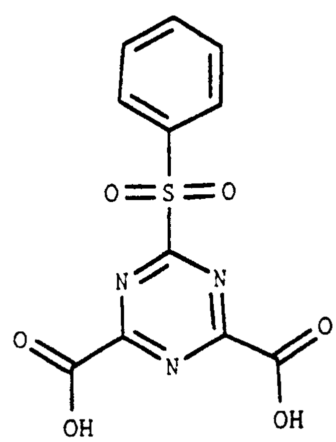

(Vk)

The polymer according to the invention is prepared in a manner known per se, for instance via acetylation of the monomers using acetic anhydride, followed by a polycondensation reaction; the reaction between the monomers takes place between 50oC and 350oC, preferably in an inert atmosphere, for instance nitrogen or argon, at elevated temperature and reduced pressure, upon which a polycondensate is obtained with the desired degree of polymerization. It is possible, but not strictly necessary, for the polycondensation reaction to be carried out in the presence of a catalyst, for instance lithium acetate, sodium acetate, potassium acetate, calcium acetate, magnesium acetate, cobalt acetate, zinc acetate, calciumbenzoate, magnesiumacetyl-acetonate, zincacetylacetonate, zirconbutylate, zirconpropylate, titaniumphenolate, sodiumphenolate, germanium dioxide, antimony dioxide, dialkyl and diaryl tin oxide, dibutyl-tin-diacetate and dibutyldimethoxytin. Preference is given to the use of magnesium acetates and/or zinc acetates. The catalyst is added in amounts of up to 1% (wt) calculated on the total weight of the monomers used. After the speed of reaction of the condensation or esterification has decreased, the

polymerization mixture is kept under vacuum (approx. 0.1 mbar) if so desired for one or more hours at an elevated temperature. The product obtained is ground after cooling. The ground product is preferably subjected to after-condensation for 5-30 hours at a temperature of 200-400 °C. The polymers according to the invention are perfectly suited for being processed from the melt, the processing temperature of the polymers being well below the decomposition temperature.
Convenient processing techniques are, inter alia, injection moulding and extrusion.

Articles wholly or partly produced from the polymers according to the invention have good properties in so far as their tensile strength is concerned, as well as a good chemical and heat resistance. Owing to this, articles produced from the polymers according to the invention are used in electrical engineering, the aircraft industry and the automotive industry.

The polymers according to the invention are particularly suited for the production of films and fibres, the strength of the film or the fibre in particular playing an important part.
Films or fibres produced from the polymers according to the invention are therefore perfectly suited for use in the textile and packaging industries. To the polymers, fillers can be added, if so desired, depending on the use of the polymers, for instance glass fibres, talcum, kaolin, wollastonite, lime, preferably up to a maximum of 60% (wt).

The invention will be further elucidated by means of the following examples without being limited thereto.

Examples I up to and including IV

In the examples the triazine derivative used was always acetoguanamine (formula VI) and benzoguanamine (formula VII).

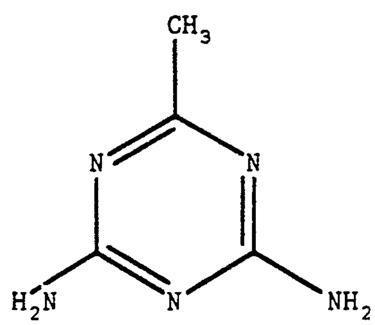

(VI)

H2

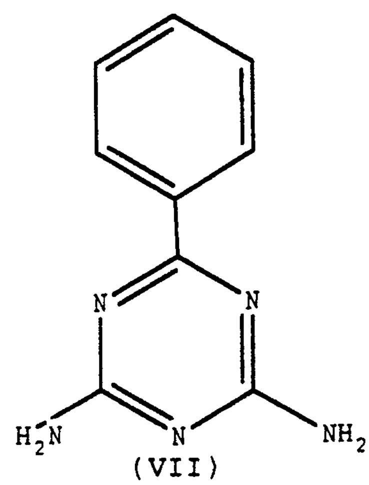

(VII)

Example I

Into a reaction vessel with stirrer, nitrogen feed tube and reflux condenser, 820 g acetic anhydride was introduced. To it was added:
4.03 moles p-hydroxybenzoic acid,
1.33 moles 6-hydroxy-2-naphthalenecarboxylic acid,
0.30 mole acetoguanamine,
0.30 mole terephthalic acid,
1 g zinc acetate.

The suspension was heated to 155 °C and kept constant for 1-3 hours (refluxing). Subsequently, the reflux condenser was converted into a distillation cooler. The temperature was raised by 46 °C/hour to 280 °C. After that the supply of nitrogen was discontinued and slowly a vacuum of 1 mm Hg was applied.

The polymer obtained was characterized by means of Differential Scanning Calorimetry (DSC). Melting temperature (Tm) = 270 °C.

Example II

Ditto as example I, however with:
4.03 moles p-hydroxybenzoic acid,
1.33 moles 6-hydroxy-2-naphthalenecarboxylic acid,
0.30 mole benzoguanamine,
0.30 mole terephthalic acid,
1 g zinc acetate.

The polymer obtained was characterized by means of Differential Scanning Calorimetry (DSC). Melting temperature (Tm) = 255° C.

Example III

Into a reaction vessel with stirrer, nitrogen feed tube and reflux condenser, 820 g acetic anhydride was introduced. To it was added:
2.87 moles p-hydroxybenzoic acid,
1.16 moles terephthalic acid,
0.57 mole isophthalic acid,
0.77 mole p,p′-biphenol,
0.77 mole hydroquinone,
0.19 mole acetoguanamine,
1 g zinc acetate.

The suspension was heated to 155° C and kept constant for 1-3 hours (refluxing). The reflux condenser was subsequently converted into a distillation cooler. The temperature was raised by 46° C/hour to 300° C. After that the supply of nitrogen was discontinued and slowly a vacuum of 1 mm Hg was applied.

The polymer obtained was characterized by means of Differential Scanning Calorimetry (DSC). Melting temperature (Tm) = 305° C.

Example IV

Ditto as example I, however with:
2.87 moles p-hydroxybenzoic acid,
1.16 moles terephthalic acid,
0.57 mole isophthalic acid, 0.77 mole p,p′-biphenol,
0.77 mole hydroquinone,
0.19 benzoguanamine,
1 g zinc acetate.

The polymer obtained was characterized by means of a DSC; Tsm = 295° C.

Comparative example A

Ditto as example III, however with:
2.87 moles p-hydroxybenzoic acid,
1.16 moles terephthalic acid,
0.57 mole isophthalic acid,
0.96 mole p,p′-biphenol,
0.77 mole hydroquinone,
1 g zinc acetate.

The polymer obtained had a melting temperature of 315° C.

Thermal shock resistance test 1

Test plates produced from the polymer of example IV and from the polymer of comparative example A were stored in a deep freezer for 2 days at a temperature of -20° C. From the deep freezer the plates were

placed direct in an oven with a temperature of 225° C.

After 50 minutes some form of blistering was found to have occurred on a test plate obtained from the polymer of comparative example A. The test plate of the polymer of example IV was still quite intact and showed no blistering.

Examples V and VI

Synthesis of 2,4-diamino-6-succinimino-1,3,5-triazine according to formula VIII.

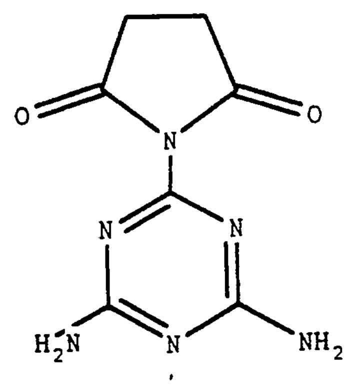

(VIII)

Into a 1-litre round-bottom flask 400 moles dimethylfuran (DMF), 63 grammes (0.5 mole) melamine and 150 grammes (1.5 moles) succinic anhydride were successively introduced at room temperature during stirring. The temperature of the solution was raised to 115oC and maintained for 5 hours. The clear solution was cooled and diluted with 150 ml distilled water, subsequently recrystallized twice using hot water. Yield: 65 grammes (62.5% conversion).

Example V

Ditto as example I, however with:
4,03 moles p-hydroxybenzoic acid,
1.33 moles 6-hydroxy-2-naphthalenecarboxylic acid,
0.30 mole terephthalic acid,
0.30 mole of the compound with formula VIII.

The polymer obtained had a melting temperature of 266° C.

Example VI

Ditto as example III, however with:
2.87 moles p-hydroxybenzoic acid,
1.16 moles terephthalic acid,
0.57 mole isophthalic acid,
0.77 mole p,p′-biphenol,
0.77 mole hydroquinone,
0.19 mole of the compound according to formula VIII.

The polymer obtained had a melting temperature of 300° C.

Thermal shock resistance test 2

After the thermal shock resistance test as described, test plates produced from the polymer of example V as well as example VI showed no blistering and were still quite intact after having been kept in the oven

for a residence time of 50 minutes.

## Claims

1. Aromatic polymer processable from the melt and showing anisotropic behaviour, based on aromatic hydroxy acids, aromatic diols and aromatic dicarboxylic acids, characterized
in that the aromatic polymer contains a triazine unit according to formula I:

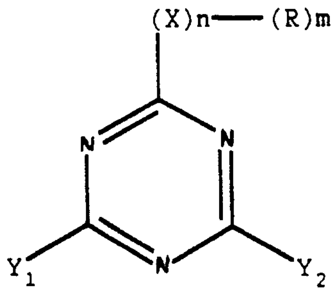

(I)

where $Y_1$ and $Y_2$ are the same or different and comprise an (alkyl)carboxy, an (alkyl)hydroxy or an amino group, where R = hydrogen, alkyl radical with 1-4 C atoms, cycloalkyl radical with 3-6 C atoms, allyl radical, aryl radical or halogen, and
m = 1 or 2;
n = 0 or 1, if n = 1
then: X = -O-, $SO_2$ or -N=;
or X (R) is a group according to any one of formulas II:

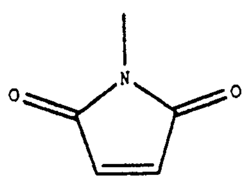 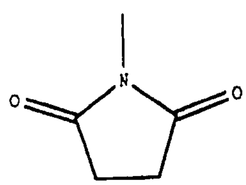 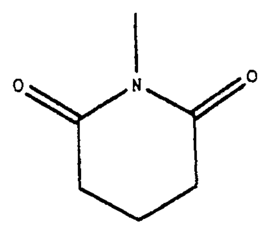 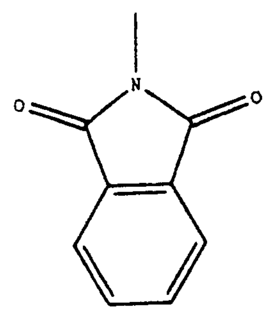

(II)

2. Polymer according to claim 1, characterized in that the polymer comprises:
   a. 0.01-10 moles % of the triazine unit according to formula (I);
   b. 20-70 moles % of a -Z-Ar-Y unit;
   c. 5-40 moles % of a -Z-Ar-Z unit;
   d. 5-40 moles % of a -Y-Ar-Y- unit;
   e. 0-30 moles % of an -R5-Ar-R4 unit;
   where: Ar = at least one phenyl group,

$$Z = -O-, \quad Y = -\overset{O}{C}-,$$

R5 =
-NR6- or -O-, and R4 = -NR6-,
where R6 is a hydrogen atom.

3. Polymer according to any one of claims 1-2, characterized in that the triazine unit is acetoguanamine and/or benzoguanamine.

4. Polymer according to any one of claims 1-2, characterized in that the triazine unit is obtained from

melamine and phthalic anhydride and/or succinic anhydride.

5. Polymer according to any one of claims 1-4, characterized in that the triazine unit is present in amounts of 0.01-7.5 moles %.

6. Polymer according to claim 2, characterized in that component (b) contains at least one p-oxybenzoyl group.

7. Polymer according to claim 2, characterized in that component (c) contains at least one p,p′-biphenoxy group.

8. Polymer according to claim 2, characterized in that component (d) contains at least one terephthaloyl and/or isophthaloyl group.

9. Article wholly or partly produced from the melt from the polymer according to any one of claims 1-8.

10. Fibre or film wholly or partly produced from the polymer according to any one of claims 1-8.

11. Polymer according to claim 1, characterized in that the polymer comprises 2,4-diamino-6-succinimo-1,3,5-triazine.